# EUROPEAN PATENT APPLICATION

(11) **EP 4 723 056 A1**
(43) Date of publication of application: **08.04.2026**
(21) Application number: 24814592.2
(22) Date of filing: 31.05.2024
(51) Int. Cl.: G06V 20/40

(54) **IMAGE PROCESSING METHOD, APPARATUS, ELECTRONIC DEVICE AND STORAGE MEDIUM**

(30) Priority: 01.06.2023 CN 202310646038
(71) Applicant: Beijing Zitiao Network Technology Co., Ltd., Beijing 100190 (CN)
(72) Inventor: WANG, Jing, Beijing 100028 (CN)
(74) Representative: Grünecker Patent- und Rechtsanwälte PartG mbB
(86) International application number: PCT/CN2024/096665
(87) International publication number: WO 2024/245398

(57) **Abstract**

Provided in the present disclosure are an image processing method, an apparatus, an electronic device and a storage medium. The method comprises: recognizing a target image frame to determine a first recognition object position and a second recognition object state; on the basis of the first recognition object position, determining a target cropping position and, on the basis of the second recognition object state, determining a target cropping size, the target cropping position being a cropping center position when the target image frame is cropped, and the target cropping size being a cropping size when the target image frame is cropped; and, according to the target cropping position and the target cropping size, cropping the target image frame and scaling same to a preset size. Executing the technical solution of the embodiments of the present disclosure can avoid complex manual camera moving processes, enrich picture infectivity, and improve user experience.

## Description

The present application claims priority to Chinese Patent Application No. 202310646038.5, filed on June 1, 2023, which is incorporated herein by reference in its entirety as a part of the present application.

### TECHNICAL FIELD

Embodiments of the present disclosure relate to an image processing method and apparatus, an electronic device, and a storage medium.

### BACKGROUND

In a video generation process, various camera movement manners are usually used in processing a video. For example, when a dance video is shot, using different camera movement manners based on body movements can greatly enhance the expressiveness and impact of the video.

In related solutions, in order to add camera movement effects to videos, one method is to move a shooting device through a handheld holder during shooting to achieve the camera movement effects, and another method is to perform post-production editing on the existing videos to enable the videos that have been generated to have the camera movement effects. However, achieving camera movement effects through movement of the handheld holder requires the photographer to possess a certain level of camera movement skill to meet the requirements, resulting in high implementation costs. Moreover, the post-production editing is usually performed through manual editing, making operation processes complex and time-consuming.

### SUMMARY

The present disclosure provides an image processing method and apparatus, an electronic device, and a storage medium, which can achieve camera movement processes without cumbersome manual operations, thereby enhancing the visual expressiveness, and improving the user experience.

According to a first aspect, the embodiments of the present disclosure provide an image processing method. The method includes:
identifying a target image frame to determine a position of a first identified object and a state of a second identified object;
determining a target cropping position based on the position of the first identified object, and determining a target cropping size based on the state of the second identified object, in which the target cropping position is a cropping center position when cropping is performed on the target image frame, and the target cropping size is a cropping size when the cropping is performed on the target image frame; and
cropping an image from the target image frame based on the target cropping position and the target cropping size, and scaling the cropped image to a preset size.

According to a second aspect, the embodiments of the present disclosure further provide an image processing apparatus. The image processing apparatus includes:
an image frame identification module, configured to identify a target image frame to determine a position of a first identified object and a state of a second identified object;
a cropping position and cropping size determination module, configured to determine a target cropping position based on the position of the first identified object, and determine a target cropping size based on the state of the second identified object, in which the target cropping position is a cropping center position when cropping is performed on the target image frame, and the target cropping size is a cropping size when the cropping is performed on the target image frame; and
an image cropping module, configured to crop an image from the target image frame based on the target cropping position and the target cropping size, and scale the cropped image to a preset size.

According to a third aspect, the embodiments of the present disclosure further provide an electronic device. The electronic device includes:
one or more processors; and
a storage apparatus, configured to store one or more programs,
the one or more programs, when executed by the one or more processors, cause the one or more processors to implement the image processing method according to any one of the embodiments of the present disclosure.

According to a fourth aspect, the embodiments of the present disclosure further provide a storage medium storing computer-executable instructions, the computer-readable storage medium stores computer instructions thereon, and the computer-executable instructions, when executed by a computer processor, are used to perform the image processing method according to any one of the embodiments of the present disclosure.

### BRIEF DESCRIPTION OF DRAWINGS

The foregoing and other features, advantages, and aspects of embodiments of the present disclosure become more apparent with reference to the following specific implementations and accompanying drawings. Throughout the accompanying drawings, the same or similar reference numerals denote the same or similar elements. It should be understood that the accompanying drawings are schematic and that parts and elements are not necessarily drawn to scale.
Fig. 1 is a schematic flowchart of an image processing method according to embodiments of the present disclosure;
Fig. 2a is a schematic flowchart of another image processing method according to embodiments of the present disclosure;
Fig. 2b is a schematic flowchart of an image processing method according to embodiments of the present disclosure;
Fig. 3 is a schematic flowchart of still another image processing method according to embodiments of the present disclosure;
Fig. 4 is a schematic structural diagram of an image processing apparatus according to embodiments of the present disclosure; and
Fig. 5 is a schematic structural diagram of an electronic device according to embodiments of the present disclosure.

### DETAILED DESCRIPTION

The embodiments of the present disclosure are described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include/comprise" and variants thereof used herein indicate open inclusion, that is, "include but are not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used to limit the scope of these messages or information.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

As an alternative but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above-mentioned process of notifying and obtaining the authorization of the user is only illustrative and does not constitute a limitation on the implementations of the present disclosure, and other manners that satisfy the relevant laws and regulations may also be applied in the implementations of the present disclosure.

It can be understood that the data involved in the technical solutions (including, but not limited to, the data itself and the access to or use of the data) shall comply with the requirements of corresponding laws, regulations, and relevant provisions.

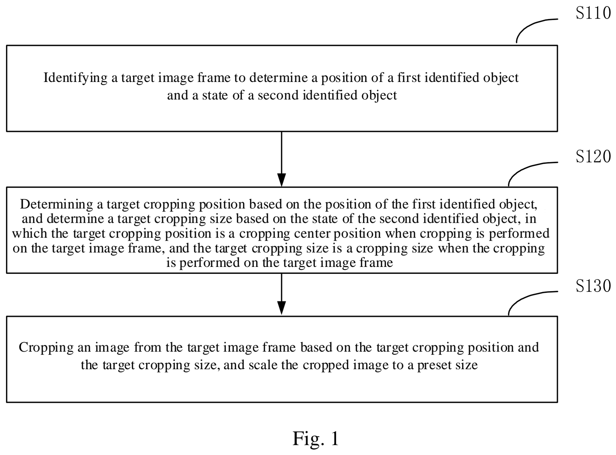

Fig. 1 is a schematic flowchart of an image processing method according to embodiments of the present disclosure. The embodiments of the present disclosure are applicable to a scenario involving the generation of camera movement videos. The method may be performed by an image processing apparatus. The apparatus may be implemented in the form of software and/or hardware. Optionally, the apparatus may be implemented by an electronic device. The electronic device may be a mobile terminal, a PC, a server, etc. As shown in Fig. 1, the method includes the following steps.

S110: identifying a target image frame to determine a position of a first identified object and a state of a second identified object.

the position of the first identified object may be determined based on a position of a target part corresponding to the first identified object identified from the target image frame, and the position of the target part may include at least one from a group consisting of: a head position, a hand position, a foot position, a hip position, and a shoulder position of the first identified object. The state of the second identified object may be an open or closed state of a hand of the second identified object identified from the target image frame. By identifying the target image frame to determine the position of the first identified object and the state of the second identified object, a cropping position and a cropping size of the target image frame can be determined to provide a reliable data basis for achieving the effect of simulating lens movement.

S120: determining a target cropping position based on the position of the first identified object, and determine a target cropping size based on the state of the second identified object, in which the target cropping position is a cropping center position when cropping is performed on the target image frame, and the target cropping size is a cropping size when the cropping is performed on the target image frame.

In this solution, the target image frame can be cropped through a cropping box, the cropping center position may be a position of the center of the cropping box in the target image frame. In this solution, the target cropping position and the target cropping size can be obtained from the target image frame, a fixed-size image can be cropped directionally at the target cropping position, and a new cropping position and a new cropping size can continue to be determined from a next image frame of the target image frame, so that images cropped from temporally adjacent image frames, when presented consecutively, can simulate the camera movement effect such as a change in position and lens movement.

S130: cropping an image from the target image frame based on the target cropping position and the target cropping size, and scale the cropped image to a preset size.

In this solution, after determining the target cropping position and the target cropping size, an image of the target cropping size at the target cropping position can be cropped from the target image frame, and each cropped image can be reduced or enlarged to the preset size based on a relationship of the target cropping size relative to the preset size. Adjusting the images cropped from the temporally adjacent image frames to the preset size and presenting the images consecutively can simulate a change in position and lens movement, and can simulate the camera movement effect such as zoom of the lens for a certain position.

In the technical solutions of this embodiment of the present disclosure, the target image frame is identified to determine the position of the first identified object and the state of the second identified object; the target cropping position is determined based on the position of the first identified object, and the target cropping size is determined based on the state of the second identified object, the target cropping position is the cropping center position when cropping is performed on the target image frame, and the target cropping size is the cropping size when the cropping is performed on the target image frame; and the image is cropped from the target image frame and scaled to the preset size based on the target cropping position and the target cropping size. By determining the cropping position and the cropping size of the image frame to crop a cropped image that simulates the lens movement effect from the image frame, camera movement processes without cumbersome manual operations can be achieved, thereby enriching visual expressiveness, and improving the user experience. This solves the problem of unsatisfactory camera movement effects caused by technical or condition limitations or the complex and time-consuming operation processes caused by simulating lens movement through post-production editing.

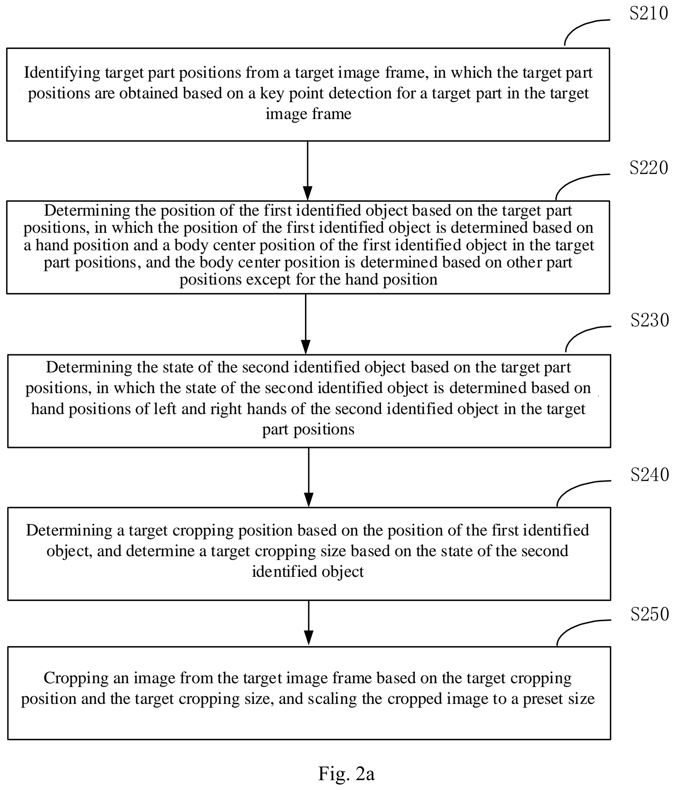

Fig. 2a is a schematic flowchart of another image processing method according to embodiments of the present disclosure. This embodiment of the present disclosure further optimizes the preceding embodiment on the basis of the above-mentioned embodiments. This embodiment of the present disclosure may be combined with various alternative solutions in one or more of the above-mentioned embodiments. As shown in Fig. 2a, the image processing method according to this embodiment of the present disclosure may include the following steps.

S210: identifying target part positions from a target image frame, in which the target part positions are obtained based on a key point detection for a target part in the target image frame.

In this solution, the target part positions can be identified from the target image frame based on a common key point detection model, the target part position may be at least one from a group consisting of: a head position, a hand position, a foot position, a hip position, and a shoulder position of an identified object in the target image frame.

As an alternative but non-limiting implementation, the identifying target part positions from the target image frame may further include, but is not limited to, the following process: after the key point detection for the target part in a previous image frame is completed, performing position and confidence prediction on the target part in the target image frame, in which the previous image frame and the target image frame are two temporally adjacent image frames.

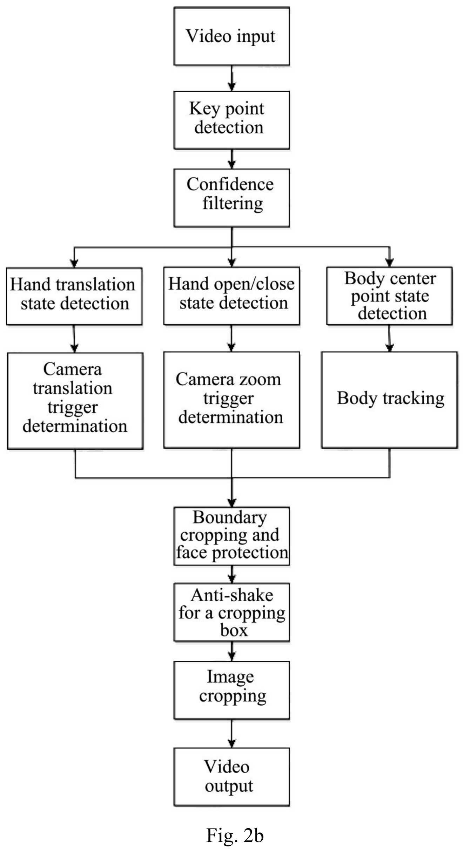

As shown in Fig. 2b, in this solution, the common key point detection model can be used to perform the key point detection on each image frame in sequence based on the time order of the image frames. Specifically, in this solution, the key point detection model can be used to perform a target part position detection on a previous image frame temporally adjacent to the target image frame, and confidence prediction can be performed on each target part position, to determine a target part position in the image frame that meets a confidence requirement, to complete the key point detection for the target part in the previous image frame; and then, performing a target part position detection on the target image frame, and performing confidence prediction on each target part position, to determine a target part position in the target image frame that meets a confidence requirement, so as to determine a confident target part position in each image frame, thereby providing a reliable data basis for determining cropping positions in subsequent image frames.

S220: determining the position of the first identified object based on the target part positions, in which the position of the first identified object is determined based on a hand position and a body center position of the first identified object in the target part positions, and the body center position is determined based on other part positions except for the hand position.

The first identified object may be an object appeared in the target image frame, and there may be at least one first identified object. For each first identified object, in this solution, the position of the first identified object can be determined based on the target part positions determined in the preceding step. The position of the first identified object may be determined based on the hand position or the body center position of the first identified object in the target part positions. The body center position may be determined based on the target part positions such as the head position, the foot position, the hip position, and the shoulder position other than the hand position. This solution can provide a reliable data source for subsequent steps of determining the target cropping position in the target image frame.

As an alternative but non-limiting implementation, the position of the first identified object includes a first reference center position and a second reference center position in the target image frame, the first reference center position is a hand center position determined based on the hand position in the target part positions, and the second reference center position is a center position determined based on at least two other part positions in the target part positions except for the hand position; or
the position of the first identified object includes a second reference center position in the target image frame, the second reference center position is a center position determined based on at least two other part positions in the target part positions except for the hand position.

As shown in Fig. 2b, when the confident target part position detected in the target image frame in this solution includes the hand position, the position of the first identified object may include the hand center position determined based on the hand position in the target image frame, i.e., the first reference center position; and the center position determined based on at least two other part positions in the target part positions except for the hand position, i.e., the second reference center position.

In this solution, when the confident target part position detected in the target image frame does not include the hand position, the position of the first identified object may include the center position determined based on at least two other part positions in the target part positions except for the hand position, i.e., the second reference center position. This solution can provide a reliable data basis for determining the target cropping position in the target image frame.

As an alternative but non-limiting implementation, the first reference center position includes at least one from a group consisting of: a center point position of a connection line of left and right hands in the target image frame, in which the center point position of the connection line of the left and right hands in the target image frame is determined based on a hand position of a left hand and a hand position of a right hand of the first identified object in the target part positions; and
a center point position of a connection line of a head and a hand in the target image frame, in which the center point position of the connection line of the head and the hand in the target image frame is determined based on a first reference position and a head position of the first identified object in the target part positions, and the first reference position is a hand position of the left hand or a hand position of the right hand.

In this solution, when the target part positions in the target image frame include the hand position of the left hand and the hand position of the right hand of the first identified object, the first reference center position may be the center point position of the connection line of left and right hands determined by the hand position of the left hand and the hand position of the right hand of the first identified object.

In this solution, when the target part positions in the target image frame include only the hand position of the left hand or the hand position of the right hand of the first identified object, and the target part positions include the head position of the first identified object, the first reference center position may be the center point position of the connection line of the head and the hand determined by the hand position of the left hand and the head position of the first identified object. Alternatively, the first reference center position may be the center point position of the connection line of the head and the hand determined by the hand position of the right hand and the head position of the first identified object. This solution can provide a reliable data basis for determining the target cropping position in the target image frame.

As an alternative but non-limiting implementation, before the determining a position of a first identified object based on the target part positions, the method may further include, but is not limited to, steps A1 to A2.

Step A1: determining a hand position difference between the target image frame and a second reference image frame, in which the hand position difference is determined based on a difference between a hand position in the target image frame and a hand position in the second reference image frame, and the second reference image frame is an image frame temporally preceding and adjacent to the target image frame.

In this solution, the hand position in the target image frame and the hand position in the image frame temporally preceding and adjacent to the target image frame can be determined, then a difference between the hand position in the target image frame and the hand position in the second reference image frame can be determined, and a ratio of the difference to interval playback time between two temporally adjacent image frames can be used as the hand position difference between the target image frame and the second reference image frame.

Step A2: adjusting the hand position of the first identified object in the target part positions based on the hand position difference.

In this solution, adaptive adjustments can be performed on the hand position of the first identified object in the target part positions in the target image frame based on the hand position difference, making the hand positions of the first identified object in the two adjacent image frames close. This solution can achieve a smooth transition of the action of the first identified object in the cropped images of two adjacent image frames, and avoid jitter.

As an alternative but non-limiting implementation, the adjusting the hand position of the first identified object in the target part positions based on the hand position difference may further include, but is not limited to, steps B1 to B2.

Step B1: in response to the hand position difference being greater than a preset position difference threshold, adjusting the hand position of the first identified object in the target part positions using a weighted mean of the hand position in the target image frame and the hand position in the second reference image frame.

It is assumed that the hand position in the target image frame is (x1, y1) and the hand position in the second reference image frame is (x2, y2), when the hand position difference is greater than a preset position difference threshold, it indicates an excessive distance between the hand positions in the two adjacent image frames, which increases the possibility of jitter when outputting the video. In this solution, the hand position of the first identified object in the target part positions can be adjusted using the weighted mean ((x1 + x2) / 2, (y1 + y2) / 2) of the hand position in the target image frame and the hand position in the second reference image frame.

Step B2: in response to the hand position difference being less than or equal to the preset position difference threshold, maintaining the hand position of the first identified object in the target part positions without adjustment.

In response to the hand position difference being less than or equal to the preset position difference threshold, it indicates a small distance between the hand positions in the two adjacent image frames, which decreases the possibility of jitter when outputting the video, and requires no adjustment on the hand position of the first identified object in the target part positions. This solution can achieve a smooth transition of the action of the first identified object in the cropped images of two adjacent image frames, and avoid jitter.

S230: determining the state of the second identified object based on the target part positions, in which the state of the second identified object is determined based on hand positions of left and right hands of the second identified object in the target part positions.

The second identified object may be an object appeared in the target image frame, and there may be at least one second identified object. For each second identified object, in this solution, the state of the second identified object can be determined based on the hand position of the left hand and the hand position of the right hand of the second identified object in the target part positions determined in the preceding step. This solution can provide a reliable data source for subsequent steps of determining the target cropping size in the target image frame.

As an alternative but non-limiting implementation, the determining the state of the second identified object based on the target part positions may further include, but is not limited to, steps C1 to C2.

Step C1: determining a second reference position of the second identified object from the target part positions, in which the second reference position includes a hand position of a left hand and a hand position of a right hand.

In this solution, the hand position of the left hand and the hand position of the right hand of the second identified object, i.e., the second reference position, can be determined from the target part positions of the target image frame.

Step C2: determining the state of the second identified object based on the second reference position, in which the state of the second identified object is determined based on a left-right hand distance between the hand position of the left hand and the hand position of the right hand of the second identified object.

In this solution, the left-right hand distance between the left and right hands can be determined based on the hand position of the left hand and the hand position of the right hand of the second identified object, and then the state of the second identified object can be determined based on the left-right hand distance. This solution can provide a reliable data basis for determining the target cropping size of the target image frame.

S240: determining a target cropping position based on the position of the first identified object, and determine a target cropping size based on the state of the second identified object.

As an alternative but non-limiting implementation, the determining a target cropping position based on the position of the first identified object may further include, but is not limited to, steps D1 to D2.

Step D1: determining a relative displacement between the first reference center position and the second reference center position in the position of the first identified object.

In this solution, the relative displacement can be determined based on the first reference center position and the second reference center position in the position of the first identified object, the relative displacement includes an offset distance and an offset direction of the first reference center position relative to the second reference center position.

Step D2: determining the target cropping position corresponding to the target image frame based on the relative displacement.

In this solution, the target cropping position corresponding to the target image frame can be determined based on the relative displacement. This solution can provide a reliable data basis for determining the cropping position in the target image frame.

As an alternative but non-limiting implementation, the determining the target cropping position corresponding to the target image frame based on the relative displacement may further include, but is not limited to, steps E1 to E2.

Step E1: when it is detected that the relative displacement is greater than a preset displacement threshold, determining the target cropping position corresponding to the target image frame based on a reference cropping position of the target image frame and the relative displacement.

The preset displacement threshold may be determined adaptively based on a size of the first identified object. In this solution, when it is detected that the relative displacement is greater than the preset displacement threshold, the target cropping position corresponding to the target image frame is determined based on the reference cropping position of the target image frame and the relative displacement. For example, the target cropping position corresponding to the target image frame is obtained by determining a movement distance based on the relative displacement and then moving in a direction of the relative displacement from the reference cropping position of the target image frame by the movement distance.

The reference cropping position of the target image frame includes at least one from a group consisting of: a center point position of a connection line of the hand position of the left hand and the hand position of the right hand in the first reference image frame, a center point position of a connection line of the head position and the hand position in the first reference image frame, and a cropping center position when an image is cropped from the second reference image frame. The first reference image frame is an image frame temporally preceding the target image frame, and the second reference image frame is an image frame temporally preceding and adjacent to the target image frame. The cropping position of the target image frame can be determined based on the cropping position of the image frame preceding the target image frame, and this solution can achieve a smooth transition of the action of the first identified object in the cropped images of two adjacent image frames, and avoid jitter.

Step E2: when it is detected that the relative displacement is less than or equal to the preset displacement threshold, determining the reference cropping position of the target image frame as the target cropping position corresponding to the target image frame.

The reference cropping position of the target image frame includes at least one from a group consisting of: a center point position of a connection line of left and right hand positions in the first reference image frame, a center point position of a connection line of a head position and a hand position in the first reference image frame, and a cropping center position when an image is cropped from the second reference image frame, in which the first reference image frame is an image frame temporally preceding the target image frame, and the second reference image frame is an image frame temporally preceding and adjacent to the target image frame.

Specifically, in this solution, when it is detected that the relative displacement is less than or equal to the preset displacement threshold, the reference cropping position of the target image frame may be used as the target cropping position corresponding to the target image frame. This solution can achieve a smooth transition of the action of the first identified object in the cropped images of two adjacent image frames, and avoiding jitter.

As an alternative but non-limiting implementation, the determining a target cropping position based on the position of the first identified object may further include, but is not limited to, the following process: determining the second reference center position as the target cropping position corresponding to the target image frame.

In this solution, when the target part positions of the first identified object in the target image frame do not include a confident hand position, the second reference center position may be determined as the target cropping position corresponding to the target image frame. This solution can provide a reliable data basis for achieving the effect of simulating lens movement.

As an alternative but non-limiting implementation, the determining a target cropping size based on the state of the second identified object may further include, but is not limited to, steps F1 to F2:

Step F1: in response to the left-right hand distance indicated by the state of the second identified object is less than a preset distance threshold, adjusting a cropping size, used when the image is cropped in the target image frame, from a first cropping size to a second cropping size, in which the first cropping size is greater than the second cropping size.

**In** this solution, the left-right hand distance indicated by the state of the second identified object can be determined based on a position difference between the hand position of the left hand and the hand position of the right hand of the second identified object in the target part positions determined in the preceding step. In this solution, when it is determined that the left-right hand distance is less than the preset distance threshold, the cropping size used when the image is cropped from the target image frame is adjusted from the first cropping size to the second cropping size. The first cropping size may be the cropping size used by the previous image frame temporally adjacent to the target image frame. The first cropping size should be greater than the second cropping size. A difference between the first cropping size and the second cropping size is a preset cropping step size. This solution can achieve gradual zoom of the lens to avoid jitter in the camera movement video.

Step F2: in response to the left-right hand distance indicated by the state of the second identified object is greater than or equal to the preset distance threshold, adjusting the cropping size, used when the image is cropped from the image frame, from the first cropping size to a third cropping size, in which the third cropping size is greater than the first cropping size.

In this solution, when it is determined that the left-right hand distance is greater than or equal to the preset distance threshold, the cropping size used when the image is cropped from the target image frame is adjusted from the first cropping size to the third cropping size. The third cropping size should be greater than the first cropping size, and a difference between the third cropping size and the first cropping size is a preset cropping step size. This solution can achieve gradual zoom of the lens to avoid jitter in the camera movement video.

As an alternative but non-limiting implementation, a cropping size adjustment ratio used when image cropping is performed on two temporally adjacent image frames is a preset ratio value, the preset ratio value determines a zoom/scaling speed when images correspondingly cropped from the two adjacent image frames are displayed consecutively.

**In** this solution, a ratio of the cropping sizes of the two temporally adjacent image frames can be set to the preset ratio value, the preset ratio value can determine a zoom speed presented when images correspondingly cropped from the two adjacent image frames are displayed consecutively. This solution can achieve the camera movement effect during the sequential playback of the image frames.

S250: cropping an image from the target image frame based on the target cropping position and the target cropping size, and scaling the cropped image to a preset size.

As an alternative but non-limiting implementation, after the cropping an image from the target image frame and scaling the cropped image to a preset size, the method further includes, but is not limited to, the following process: generating a target image sequence based on images cropped from different image frames, in which sizes of the images in the target image sequence that are cropped from different image frames are same when the images are presented consecutively.

Specifically, as shown in Fig. 2b, in this solution, the target image sequence can be formed based on the images cropped from different image frames in the time order, and the respective images in the target image sequence should be in the same size when presented consecutively, the size may be a preset size or another size. This solution can generate videos with camera movement effects based on the cropped images of the respective image frames.

In the technical solutions of the embodiments of the present disclosure, the target part positions are identified from the target image frame, and the target part positions are obtained through a key point detection for the target part in the target image frame; the position of the first identified object is determined based on the target part positions, and the position of the first identified object is determined based on the hand position of the first identified object and the body center position of the first identified object in the target part positions, and the body center position is determined based on other part positions except for the hand position; the state of the second identified object is determined based on the target part positions, and the state of the second identified object is determined based on the hand positions of the left and right hands of the second identified object in the target part positions; the target cropping position is determined based on the position of the first identified object, and the target cropping size is determined based on the state of the second identified object, the target cropping position is the cropping center position when cropping is performed on the target image frame, and the target cropping size is the cropping size when the cropping is performed on the target image frame; the image is cropped from the target image frame and scaled to the preset size based on the target cropping position and the target cropping size. By determining the cropping position and the cropping size of the image frame to crop a cropped image that simulates the lens movement effect from the image frame, camera movement processes without cumbersome manual operations can be achieved, thereby enriching the visual impact, and improving the user experience. This solves the problem of unsatisfactory camera movement effects caused by technical or condition limitations or the complex and time-consuming operation processes caused by simulating lens movement through post-production editing.

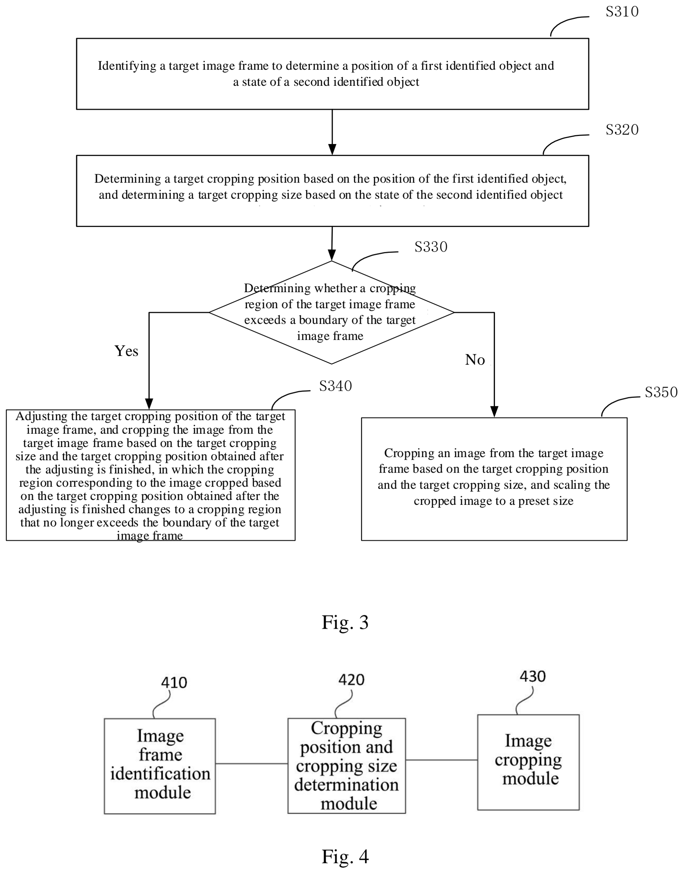

Fig. 3 is a schematic flowchart of still another image processing method according to embodiments of the present disclosure. This embodiment of the present disclosure further optimizes the preceding embodiment on the basis of the above-mentioned embodiments. This embodiment of the present disclosure may be combined with various alternative solutions in one or more of the above-mentioned embodiments. As shown in Fig. 3, the image processing method according to this embodiment of the present disclosure may include the following steps.

S310: identifying a target image frame to determine a position of a first identified object and a state of a second identified object.

S320: determining a target cropping position based on the position of the first identified object, and determining a target cropping size based on the state of the second identified object.

S330: determining whether a cropping region of the target image frame exceeds a boundary of the target image frame. If yes, performing S340; or if no, performing S350.

The cropping region of the target image frame is determined based on the target cropping position and the target cropping size.

As shown in Fig. 2b, in this solution, the cropping region of the target image frame can be determined based on the target cropping position and the target cropping size, and then, whether the cropping region of the target image frame exceeds the boundary of the target image frame can be determined based on position coordinates of the cropping region and position coordinates of the boundary of the target image frame. Alternatively, whether the cropping region of the target image frame exceeds the boundary of the target image frame can be determined based on whether the area of the intersection between the cropping region and the target image frame is consistent with the area of the cropping region.

S340: adjusting the target cropping position of the target image frame, and cropping the image from the target image frame based on the target cropping size and the target cropping position obtained after the adjusting is finished, in which the cropping region corresponding to the image cropped based on the target cropping position obtained after the adjusting is finished changes to a cropping region that no longer exceeds the boundary of the target image frame.

In this solution, when it is determined that the cropping region of the target image frame exceeds the boundary of the target image frame, it indicates that cropping the target image frame may result in black borders, requiring correction on a value that exceeds the boundary of the target image frame, the target cropping position of the target image frame can be adjusted, for example, x and y in a cropping box (x, y, w, h) determined by the target cropping position and the target cropping size are limited, and w and h are kept unchanged. The target cropping position and the target cropping size are obtained after the adjusting is finished, and the image is cropped from the target image frame based on the target cropping size and the target cropping position obtained after the adjusting is finished. The area of the intersection of the cropping region corresponding to the cropped image and the target image frame is exactly the area of the cropping region. That is, the cropping region corresponding to the image cropped based on the target cropping position after the adjusting is finished changes to a cropping region that no longer exceeds the boundary of the target image frame. This can ensure the integrity of the cropped image to provide a reliable data source for the presentation of the camera movement video.

S350: cropping an image from the target image frame based on the target cropping position and the target cropping size, and scaling the cropped image to a preset size.

In this solution, when it is determined that the cropping region of the target image frame does not exceed the boundary of the target image frame, the image can be directly cropped from the target image frame based on the target cropping position and the target cropping size, and the cropped image can be scaled to the preset size. This solution can provide a reliable data basis for the effect of simulating lens movement when the images cropped in the temporally adjacent image frames are presented sequentially.

As an alternative but non-limiting implementation, before the cropping an image from the target image frame based on the target cropping position and the target cropping size, the method may further include, but is not limited to, steps G1 to G2.

Step G1: determining a facial integrity for the cropping region of the target image frame based on the target cropping position, in which the facial integrity is used to represent a proportion of a face part located in the cropping region in a complete face.

As shown in Fig. 2b, before cropping the image from the target image frame based on the target cropping position and the target cropping size, this solution further needs to confirm the proportion of the face part located in the cropping region determined based on the target cropping position and the target cropping size in the complete face, i.e., the facial integrity. This solution can provide a reliable data basis for ensuring that the face falls as much as possible within the cropping region.

Step G2: in response to the facial integrity being less than a preset integrity threshold, adjusting the target cropping position of the target image frame to make the facial integrity no longer less than the preset integrity threshold.

In this solution, when it is determined that the facial integrity is less than the preset integrity threshold, it indicates that the facial part region falling within the cropping region is incomplete and the facial cropping will a generate undesirable visual effect and affect the presentation of the camera movement effect, an adaptive adjustment can be performed on the target cropping position of the target image frame to make the facial integrity no longer less than the preset integrity threshold, thereby ensuring full facial inclusion. This solution can provide a reliable data basis for ensuring the presentation of the camera movement effect.

As an alternative but non-limiting implementation, before the cropping an image from the target image frame based on the target cropping position and the target cropping size, the method may further include, but is not limited to, steps H1 to H2.

Step H1: determining a cropping position difference between the target image frame and a second reference image frame, in which the cropping position difference is determined based on a difference between a cropping center position when cropping is performed on the target image frame and a cropping center position when cropping is performed on the second reference image frame, and the second reference image frame is an image frame temporally preceding and adjacent to the target image frame.

As shown in Fig. 2b, in this solution, the cropping center position in the target image frame and the cropping center position in the image frame temporally preceding and adjacent to the target image frame (i.e., the second reference image frame) can be determined, and the cropping position difference between the target image frame and the second reference image frame can be determined based on the cropping positions of the adjacent image frames.

Step H2: adjusting, based on the cropping position difference, the cropping center position when the cropping is performed on the target image frame.

Specifically, in this solution, when it is determined that the cropping position difference exceeds a preset movement displacement, it indicates an excessive difference between the cropping center positions of the adjacent image frames, resulting in jitter in the final camera movement video, weighted mean calculation can be performed on the cropping center position when the cropping is performed on the second reference image frame and the cropping center position when the cropping is performed on the target image frame, to obtain a new cropping center position of the target image frame, and the cropping center position when the cropping is performed on the target image frame can be adjusted based on the new cropping center position, so as to reduce the movement speed of the cropping box, thereby avoiding jitter in the camera movement video. In this solution, when it is determined that the cropping position difference does not exceed the preset movement displacement, there is no need to adjust the cropping center position.

In the technical solutions of the embodiments of the present disclosure, the target image frame is identified to determine the position of the first identified object and the state of the second identified object; the target cropping position is determined based on the position of the first identified object, and the target cropping size is determined based on the state of the second identified object, the target cropping position is the cropping center position used when the cropping is performed on the target image frame, and the target cropping size is the cropping size used when the cropping is performed on the target image frame; and whether the cropping region of the target image frame exceeds the boundary of the target image frame is determined, the cropping region of the target image frame is determined based on the target cropping position and the target cropping size; and when the cropping region exceeds the boundary of the target image frame, the target cropping position of the target image frame is adjusted, and the image is cropped from the target image frame based on the target cropping size and the target cropping position obtained after the adjusting is finished, and the cropping region corresponding to the image cropped based on the target cropping position obtained after the adjusting is finished changes to a cropping region that no longer exceeds the boundary of the target image frame; or when the cropping region does not exceed the boundary of the target image frame, the image is cropped from the target image frame based on the target cropping position and the target cropping size and scaled to the preset size. By determining the cropping position and the cropping size of the image frame to crop a cropped image that simulates the lens movement effect from the image frame, camera movement processes without cumbersome manual operations can be achieved, thereby enhancing the visual impact, and improving the user experience. This solution solves the problem of unsatisfactory camera movement effects caused by technical or condition limitations or the complex and time-consuming operation processes caused by simulating lens movement through post-production editing.

Fig. 4 is a schematic structural diagram of an image processing apparatus according to embodiments of the present disclosure. As shown in Fig. 4, the apparatus includes:
an image frame identification module 410, configured to identify a target image frame to determine a position of a first identified object and a state of a second identified object;
a cropping position and cropping size determination module 420, configured to determine a target cropping position based on the position of the first identified object, and determine a target cropping size based on the state of the second identified object, in which the target cropping position is a cropping center position when cropping is performed on the target image frame, and the target cropping size is a cropping size when the cropping is performed on the target image frame; and
an image cropping module 430, configured to crop an image from the target image frame based on the target cropping position and the target cropping size, and scale the cropped image to a preset size.

In an alternative solution of the embodiments of the present disclosure, optionally, the apparatus further includes a target image sequence generation module configured to: after the image is cropped from the target image frame and scaled to the preset size, generate a target image sequence based on images cropped from different image frames, in which sizes of the images in the target image sequence that are cropped from different image frames are same when the images are presented consecutively.

In an alternative solution of the embodiments of the present disclosure, optionally, the image frame identification module 410 includes: a target part position identification unit configured to identify target part positions from the target image frame, in which the target part positions are obtained based on a key point detection for a target part in the target image frame; a first identified object position determination unit configured to determine the position of the first identified object based on the target part positions, in which the position of the first identified object is determined based on a hand position of the first identified object and a body center position of the first identified object in the target part positions, and the body center position is determined based on other part positions except for the hand position; and a second identified object state determination unit configured to determine the state of the second identified object based on the target part positions, in which the state of the second identified object is determined based on hand positions of left and right hands of the second identified object in the target part position.

In an alternative solution of the embodiments of the present disclosure, optionally, the target part position identification unit is specifically configured to: after the key point detection for the target part in a previous image frame is completed, perform position and confidence prediction on the target part in the target image frame, in which the previous image frame and the target image frame are two temporally adjacent image frames.

In an alternative solution of the embodiments of the present disclosure, optionally, the position of the first identified object includes a first reference center position and a second reference center position in the target image frame, the first reference center position is a hand center position determined based on the hand position in the target part positions, and the second reference center position is a center position determined based on at least two other part positions in the target part positions except for the hand position; or the position of the first identified object includes a second reference center position in the target image frame, the second reference center position is a center position determined based on at least two other part positions in the target part positions except for the hand position.

In an alternative solution of the embodiments of the present disclosure, optionally, the first reference center position includes at least one from a group consisting of: a center point position of a connection line of left and right hands in the target image frame, in which the center point position of the connection line of the left and right hands in the target image frame is determined based on a hand position of the left hand and a hand position of the right hand of the first identified object in the target part positions; and a center point position of a connection line of a head and a hand in the target image frame, in which the center point position of the connection line of the head and the hand in the target image frame is determined based on a first reference position and a head position of the first identified object in the target part positions, and the first reference position is a hand position of the left hand or a hand position of the right hand.

In an alternative solution of the embodiments of the present disclosure, optionally, the cropping position and cropping size determination module 420 includes: a relative displacement determination unit configured to determine a relative displacement between the first reference center position and the second reference center position in the position of the first identified object; and a target cropping position determination unit configured to determine the target cropping position corresponding to the target image frame based on the relative displacement.

In an alternative solution of the embodiments of the present disclosure, optionally, the target cropping position determination unit is specifically configured to: when it is detected that the relative displacement is greater than a preset displacement threshold, determine the target cropping position corresponding to the target image frame based on a reference cropping position of the target image frame and the relative displacement; or when it is detected that the relative displacement is less than or equal to the preset displacement threshold, determine the reference cropping position of the target image frame as the target cropping position corresponding to the target image frame, in which the reference cropping position of the target image frame includes at least one from a group consisting of: a center point position of a connection line of left and right hand positions in a first reference image frame, a center point position of a connection line of a head position and a hand position in the first reference image frame, and a cropping center position used when an image is cropped from a second reference image frame, in which the first reference image frame is an image frame temporally preceding the target image frame, and the second reference image frame is an image frame temporally preceding and adjacent to the target image frame.

In an alternative solution of the embodiments of the present disclosure, optionally, the cropping position and cropping size determination module 420 is specifically configured to determine the second reference center position as the target cropping position corresponding to the target image frame.

In an alternative solution of the embodiments of the present disclosure, optionally, the apparatus further includes a hand position difference determination unit configured to: before the position of the first identified object is determined based on the target part positions, determine a hand position difference between the target image frame and a second reference image frame, in which the hand position difference is determined based on a difference between a hand position in the target image frame and a hand position in the second reference image frame, and the second reference image frame is an image frame temporally preceding and adjacent to the target image frame; and a hand position adjustment unit configured to adjust the hand position of the first identified object in the target part positions based on the hand position difference.

In an alternative solution of the embodiments of the present disclosure, optionally, the hand position adjustment unit is specifically configured to: in response to the hand position difference being greater than a preset position difference threshold, adjust the hand position of the first identified object in the target part positions using a weighted mean of the hand position in the target image frame and the hand position in the second reference image frame; or in response to the hand position difference being less than or equal to the preset position difference threshold, maintaining the hand position of the first identified object in the target part positions without adjustment.

In an alternative solution of the embodiments of the present disclosure, optionally, the state of the second identified object determination unit includes: a second reference position determination subunit configured to determine a second reference position of the second identified object from the target part positions, in which the second reference position includes a hand position of a left hand and a hand position of a right hand; and a second identified object state determination subunit configured to determine the state of the second identified object based on the second reference position, in which the state of the second identified object is determined based on a left-right hand distance between the hand position of the left hand and the hand position of the right hand of the second identified object.

In an alternative solution of the embodiments of the present disclosure, optionally, the cropping position and cropping size determination module 420 is specifically configured to: in response to the left-right hand distance indicated by the state of the second identified object being less than a preset distance threshold, adjust a cropping size, used when the image is cropped in the target image frame, from a first cropping size to a second cropping size, in which the first cropping size is greater than the second cropping size; or in response to the left-right hand distance indicated by the state of the second identified object being greater than or equal to the preset distance threshold, adjust the cropping size, used when the image is cropped from the image frame, from the first cropping size to a third cropping size, in which the third cropping size is greater than the first cropping size.

In an alternative solution of the embodiments of the present disclosure, optionally, a cropping size adjustment ratio used when image cropping is performed on two temporally adjacent image frames is a preset ratio value, and the preset ratio value determines a zoom speed presented when images correspondingly cropped from the two adjacent image frames are displayed consecutively.

In an alternative solution of the embodiments of the present disclosure, optionally, the image cropping module 430 includes: a determination unit configured to determine whether a cropping region of the target image frame exceeds a boundary of the target image frame, in which the cropping region of the target image frame is determined based on the target cropping position and the target cropping size; and
a target cropping position adjustment unit configured to: in response to the cropping region exceeding the boundary of the target image frame, adjust the target cropping position on the target image frame, and crop the image from the target image frame based on the target cropping size and the target cropping position obtained after the adjusting is finished, in which the cropping region corresponding to the image cropped based on the target cropping position obtained after the adjusting is finished changes to a cropping region that no longer exceeds the boundary of the target image frame; and an image cropping unit configured to: in response to the cropping region not exceeding the boundary of the target image frame, crop the image from the target image frame based on the target cropping position and the target cropping size.

In an alternative solution of the embodiments of the present disclosure, optionally, the apparatus further includes a facial integrity determination module configured to: before the image is cropped from the target image frame based on the target cropping position and the target cropping size, determine a facial integrity for the cropping region of the target image frame based on the target cropping position, in which the facial integrity is used to represent a proportion of a face part located in the cropping region in a complete face; and in response to the facial integrity being less than a preset integrity threshold, adjust the target cropping position on the target image frame to make the facial integrity no longer less than the preset integrity threshold.

In an alternative solution of the embodiments of the present disclosure, optionally, the apparatus further includes a cropping center position adjustment module configured to: before the image is cropped from the target image frame based on the target cropping position and the target cropping size, determine a cropping position difference between the target image frame and a second reference image frame, in which the cropping position difference is determined based on a difference between a cropping center position when the cropping is performed on the target image frame and a cropping center position when the cropping is performed on the second reference image frame, and the second reference image frame is an image frame temporally preceding and adjacent to the target image frame; and adjust, based on the cropping position difference, the cropping center position when the cropping is performed on the target image frame.

The image processing apparatus according to the embodiments of the present disclosure can perform the image processing method according to any embodiment of the present disclosure, and has corresponding functional modules and beneficial effects for performing the method.

It is worth noting that the units and modules included in the above-mentioned apparatus are obtained through division merely according to functional logic, but are not limited to the above-mentioned division, as long as corresponding functions can be implemented. In addition, specific names of the functional units are merely used for mutual distinguishing, and are not used to limit the scope of protection of the embodiments of the present disclosure.

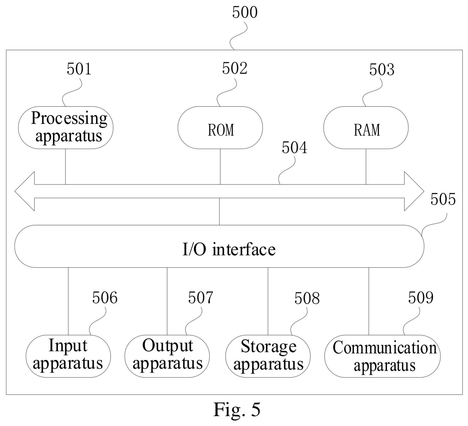

Fig. 5 is a schematic structural diagram of an electronic device according to embodiments of the present disclosure. Reference is made to Fig. 5 below, which is a schematic structural diagram of an electronic device (such as a terminal device or a server in Fig. 5) 500 suitable for implementing embodiments of the present disclosure. A terminal device in this embodiment of the present disclosure may include, but is not limited to, mobile terminals such as a mobile phone, a notebook computer, a digital broadcast receiver, a personal digital assistant (PDA), a tablet computer (portable Android device, PAD), a portable media player (PMP), and a vehicle-mounted terminal (e.g., a vehicle navigation terminal), and fixed terminals such as a digital TV and a desktop computer. The electronic device shown in Fig. 5 is merely an example, and shall not impose any limitation on the function and scope of use of the embodiments of the present disclosure.

As shown in Fig. 5, the electronic device 500 may include a processing apparatus (for example, a central processing unit or a graphics processing unit) 501 that may perform a variety of appropriate actions and processing in accordance with a program stored in a read-only memory (ROM) 502 or a program loaded from a storage apparatus 508 into a random access memory (RAM) 503. The RAM 503 further stores various programs and data required for the operation of the electronic device 500. The processing apparatus 501, the ROM 502, and the RAM 503 are connected to one another through a bus 504. An input/output (I/O) interface 505 is also connected to the bus 504.

Generally, the following apparatuses may be connected to the I/O interface 505: an input apparatus 506 including, for example, a touchscreen, a touchpad, a keyboard, a mouse, a camera, a microphone, an accelerometer, and a gyroscope; an output apparatus 507 including, for example, a liquid crystal display (LCD), a speaker, and a vibrator; the storage apparatus 508 including, for example, a magnetic tape and a hard disk; and a communication apparatus 509. The communication apparatus 509 may allow the electronic device 500 to perform wireless or wired communication with other devices to exchange data. Although Fig. 5 shows the electronic device 500 having various apparatuses, it should be understood that it is not required to implement or have all of the shown apparatuses. It may be an alternative to implement or have more or fewer apparatuses.

In particular, according to an embodiment of the present disclosure, the process described above with reference to the flowchart may be implemented as a computer software program. For example, an embodiment of the present disclosure includes a computer program product, which includes a computer program carried on a non-transitory computer-readable medium, where the computer program includes program code for performing the method shown in the flowchart. In such an embodiment, the computer program may be downloaded and installed from a network through the communication apparatus 509, installed from the storage apparatus 508, or installed from the ROM 502. When the computer program is executed by the processing apparatus 501, the above-mentioned functions defined in the method of the embodiment of the present disclosure are performed.

The names of messages or information exchanged between a plurality of apparatuses in the implementations of the present disclosure are used for illustrative purposes only, and are not used to limit the scope of these messages or information.

The electronic device according to this embodiment of the present disclosure and the image processing methods according to the above-mentioned embodiments belong to the same inventive concept. For the technical details not exhaustively described in this embodiment, reference may be made to the above-mentioned embodiments, and this embodiment and the above-mentioned embodiments have the same beneficial effects.

The embodiments of the present disclosure provide a computer storage medium having stored thereon a computer program that, when executed by a processor, causes the image processing method provided in the above-mentioned embodiments to be implemented.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. **In** the present disclosure, the computer-readable storage medium may be any tangible medium containing or storing a program which may be used by or in combination with an instruction execution system, apparatus, or device. **In** the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some implementations, a client and a server may communicate using any currently known or future-developed network protocol such as the hypertext transfer protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above-mentioned computer-readable medium may be contained in the above electronic device. Alternatively, the computer-readable medium may exist independently, without being assembled into the electronic device.

The above-mentioned computer-readable medium carries one or more programs that, when executed by the electronic device, cause the electronic device to: identify a target image frame to determine a position of a first identified object and a state of a second identified object;
determine a target cropping position based on the position of the first identified object, and determine a target cropping size based on the state of the second identified object, in which the target cropping position is a cropping center position when cropping is performed on the target image frame, and the target cropping size is a cropping size when the cropping is performed on the target image frame; and
crop an image from the target image frame based on the target cropping position and the target cropping size, and scale the cropped image to a preset size.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two Internet protocol addresses".

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

**In** the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

According to one or more embodiments of the present disclosure, Example 1 provides an image processing method. The method includes:
identifying a target image frame to determine a position of a first identified object and a state of a second identified object;
determining a target cropping position based on the position of the first identified object, and determining a target cropping size based on the state of the second identified object, in which the target cropping position is a cropping center position of when the cropping is performed on the target image frame, and the target cropping size is a cropping size when the cropping is performed on the target image frame; and
cropping an image from the target image frame based on the target cropping position and the target cropping size, and scaling the cropped image to a preset size.

Example 2 is based on the method of Example 1, after the cropping an image from the target image frame and scaling the cropped image to a preset size, the method further includes:
generating a target image sequence based on images cropped from different image frames, in which sizes of the images in the target image sequence that are cropped from different image frames are same when the images presented consecutively.

Example 3 is based on the method of Example 1, the identifying a target image frame to determine a position of a first identified object and a state of a second identified object includes:
identifying target part positions from the target image frame, in which the target part positions are obtained based on a key point detection for a target part in the target image frame;
determining the position of the first identified object based on the target part positions, in which the position of the first identified object is determined based on a hand position of the first identified object and a body center position of the first identified object in the target part positions, and the body center position is determined based on other part positions except for the hand position; and
determining the state of the second identified object based on the target part positions, in which the state of the second identified object is determined based on hand positions of left and right hands of the second identified object in the target part positions.

Example 4 is based on the method of Example 3, the identifying target part positions from the target image frame includes:
Performing, after the key point detection for the target part in a previous image frame is completed, position and confidence prediction on the target part in the target image frame, in which the previous image frame and the target image frame are two temporally adjacent image frames.

Example 5 is based on the method of Example 3, the position of the first identified object includes a first reference center position and a second reference center position in the target image frame, the first reference center position is a hand center position determined based on the hand position in the target part positions, and the second reference center position is a center position determined based on at least two other part positions in the target part positions except for the hand position; or
the position of the first identified object includes a second reference center position in the target image frame, in which the second reference center position is a center position determined based on at least two other part positions in the target part positions except for the hand position.

Example 6 is based on the method of Example 5, the first reference center position includes at least one from a group consisting of:
a center point position of a connection line of left and right hands in the target image frame, in which the center point position of the connection line of the left and right hands in the target image frame is determined based on a hand position of the left hand and a hand position of the right hand of the first identified object in the target part positions; and
a center point position of a connection line of a head and a hand in the target image frame, in which the center point position of the connection line of the head and the hand in the target image frame is determined based on a first reference position and a head position of the first identified object in the target part positions, and the first reference position is a hand position of the left hand or a hand position of the right hand.

Example 7 is based on the method of Example 5, the determining a target cropping position based on the position of the first identified object includes:
determining a relative displacement between the first reference center position and the second reference center position in the position of the first identified object; and
determining the target cropping position corresponding to the target image frame based on the relative displacement.

Example 8 is based on the method of Example 7, the determining the target cropping position corresponding to the target image frame based on the relative displacement includes:
determining, when it is detected that the relative displacement is greater than a preset displacement threshold, the target cropping position corresponding to the target image frame based on a reference cropping position of the target image frame and the relative displacement; or
determining, when it is detected that the relative displacement is less than or equal to the preset displacement threshold, the reference cropping position of the target image frame as the target cropping position corresponding to the target image frame,
in which the reference cropping position of the target image frame includes at least one from a group consisting of: a center point position of a connection line of left and right hand positions in a first reference image frame, a center point position of a connection line of a head position and a hand position in the first reference image frame, and a cropping center position when an image is cropped from a second reference image frame, in which the first reference image frame is an image frame temporally preceding the target image frame, and the second reference image frame is an image frame temporally preceding and adjacent to the target image frame.

Example 9 is based on the method of Example 5, the determining a target cropping position based on the position of the first identified object includes:
determining the second reference center position as the target cropping position corresponding to the target image frame.

Example 10 is based on the method of Example 3, before the determining the position of the first identified object based on the target part positions, the method further includes:
determining a hand position difference between the target image frame and a second reference image frame, in which the hand position difference is determined based on a difference between a hand position in the target image frame and a hand position in the second reference image frame, and the second reference image frame is an image frame temporally preceding and adjacent to the target image frame; and
adjusting the hand position of the first identified object in the target part positions based on the hand position difference.

Example 11 is based on the method of Example 10, the adjusting the hand position of the first identified object in the target part positions based on the hand position difference includes:
adjusting, in response to the hand position difference being greater than a preset position difference threshold, the hand position of the first identified object in the target part positions using a weighted mean of the hand position in the target image frame and the hand position in the second reference image frame; or
maintaining, in response to the hand position difference being less than or equal to the preset position difference threshold, the hand position of the first identified object in the target part positions without adjustment.

Example 12 is based on the method of Example 3, the determining the state of the second identified object based on the target part positions includes:
determining a second reference position of the second identified object from the target part positions, in which the second reference position includes a hand position of a left hand and a hand position of a right hand; and
determining the state of the second identified object based on the second reference position, in which the state of the second identified object is determined based on a left-right hand distance between the hand position of the left hand and the hand position of the right hand of the second identified object.

Example 13 is based on the method of Example 12, the determining a target cropping size based on the state of the second identified object includes:
adjusting, in response to the left-right hand distance indicated by the state of the second identified object being less than a preset distance threshold, a cropping size, used when the image is cropped from the target image frame, from a first cropping size to a second cropping size, in which the first cropping size is greater than the second cropping size; or
adjusting, in response to the left-right hand distance indicated by the state of the second identified object being greater than or equal to the preset distance threshold, the cropping size used when the image is cropped from the image frame, from the first cropping size to a third cropping size, in which the third cropping size is greater than the first cropping size.

Example 14 is based on the method of Example 13, a cropping size adjustment ratio used when image cropping is performed on two temporally adjacent image frames is a preset ratio value, and the preset ratio value determines a zoom speed presented when images correspondingly cropped from the two adjacent image frames are displayed consecutively.

Example 15 is based on the method of Example 1, the cropping an image from the target image frame based on the target cropping position and the target cropping size includes:
determining whether a cropping region of the target image frame exceeds a boundary of the target image frame, in which the cropping region of the target image frame is determined based on the target cropping position and the target cropping size; and
adjusting, in response to the cropping region exceeds the boundary of the target image frame, the target cropping position on the target image frame, and cropping the image from the target image frame based on the target cropping size and the target cropping position obtained after the adjusting is finished, in which the cropping region corresponding to the image cropped based on the target cropping position obtained after the adjusting is finished changes to a cropping region that no longer exceeds the boundary of the target image frame; or
cropping, in response to the cropping region not exceeding the boundary of the target image frame, the image from the target image frame based on the target cropping position and the target cropping size.

Example 16 is based on the method of Example 1 or Example 15, before the cropping an image from the target image frame based on the target cropping position and the target cropping size, the method further includes:
determining a facial integrity for the cropping region of the target image frame based on the target cropping position, in which the facial integrity is used to represent a proportion of a face part located in the cropping region in a complete face; and
in response to the facial integrity being less than a preset integrity threshold, adjusting the target cropping position on the target image frame to make the facial integrity no longer less than the preset integrity threshold.

Example 17 is based on the method of Example 1 or Example 15, before the cropping an image from the target image frame based on the target cropping position and the target cropping size, the method further includes:
determining a cropping position difference between the target image frame and a second reference image frame, in which the cropping position difference is determined based on a difference between the cropping center position when the cropping is performed on the target image frame and a cropping center position when the cropping is performed on the second reference image frame, and the second reference image frame is an image frame temporally preceding and adjacent to the target image frame; and
adjusting, based on the cropping position difference, the cropping center position when the cropping is performed on the target image frame.

According to one or more embodiments of the present disclosure, Example 18 further provides an image processing apparatus. The image processing apparatus includes:
an image frame identification module, configured to identify a target image frame to determine a position of a first identified object and a state of a second identified object;
a cropping position and cropping size determination module, configured to determine a target cropping position based on the position of the first identified object, and determine a target cropping size based on the state of the second identified object, in which the target cropping position is a cropping center position when the cropping is performed on the target image frame, and the target cropping size is a cropping size when the cropping is performed on the target image frame; and
an image cropping module, configured to crop an image from the target image frame based on the target cropping position and the target cropping size, and scale the cropped image to a preset size.

According to one or more embodiments of the present disclosure, Example 19 further provides an electronic device. The electronic device includes:
one or more processors; and
a storage apparatus, configured to store one or more programs,
in which the one or more programs, when executed by the one or more processors, cause the one or more processors to implement the image processing method according to any one of Examples 1 to 17.

According to one or more embodiments of the present disclosure, Example 20 further provides a storage medium including a computer-executable instruction, the computer-executable instruction, when executed by a computer processor, is used to perform the image processing method according to any one of Examples 1 to 17.

The foregoing descriptions are merely preferred embodiments of the present disclosure and explanations of the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. An image processing method, comprising:
identifying a target image frame to determine a position of a first identified object and a state of a second identified object;
determining a target cropping position based on the position of the first identified object, and determining a target cropping size based on the state of the second identified object, wherein the target cropping position is a cropping center position when cropping is performed on the target image frame, and the target cropping size is a cropping size when the cropping is performed on the target image frame; and
cropping an image from the target image frame based on the target cropping position and the target cropping size, and scaling the cropped image to a preset size.

2. The method according to claim 1, wherein after the cropping an image from the target image frame and scaling the cropped image to a preset size, the method further comprises:
generating a target image sequence based on images cropped from different image frames, wherein sizes of the images in the target image sequence that are cropped from different image are same when the images are presented consecutively.

3. The method according to claim 1, wherein the identifying a target image frame to determine a position of a first identified object and a state of a second identified object comprises:
identifying target part positions from the target image frame, wherein the target part positions are obtained based on a key point detection for a target part in the target image frame;
determining the position of the first identified object based on the target part positions, wherein the position of the first identified object is determined based on a hand position of the first identified object and a body center position of the first identified object in the target part positions, and the body center position is determined based on other part positions except for the hand position; and
determining the state of the second identified object based on the target part positions, wherein the state of the second identified object is determined based on hand positions of left and right hands of the second identified object in the target part positions.

4. The method according to claim 3, wherein the identifying target part positions from the target image frame comprises:
performing, after a key point detection for a target part in a previous image frame is completed, position and confidence prediction on the target part in the target image frame, wherein the previous image frame and the target image frame are two temporally adjacent image frames.

5. The method according to claim 3, wherein the position of the first identified object comprises a first reference center position and a second reference center position in the target image frame, wherein the first reference center position is a hand center position determined based on the hand position in the target part positions, and the second reference center position is a center position determined based on at least two other part positions in the target part positions except for the hand position; or
wherein the position of the first identified object comprises a second reference center position in the target image frame, the second reference center position is a center position determined based on at least two other part positions in the target part positions except for the hand position.

6. The method according to claim 5, wherein the first reference center position comprises at least one from a group consisting of:
a center point position of a connection line of left and right hands in the target image frame, wherein the center point position of the connection line of the left and right hands in the target image frame is determined based on a hand position of a left hand and a hand position of a right hand of the first identified object in the target part positions; and
a center point position of a connection line of a head and a hand in the target image frame, wherein the center point position of the connection line of the head and the hand in the target image frame is determined based on a first reference position and a head position of the first identified object in the target part positions, and the first reference position is a hand position of a left hand or a hand position of a right hand.

7. The method according to claim 5, wherein the determining a target cropping position based on the position of the first identified object comprises:
determining a relative displacement between the first reference center position and the second reference center position in the position of the first identified object; and
determining the target cropping position corresponding to the target image frame based on the relative displacement.

8. The method according to claim 7, wherein the determining the target cropping position corresponding to the target image frame based on the relative displacement comprises:
determining, when it is detected that the relative displacement is greater than a preset displacement threshold, the target cropping position corresponding to the target image frame based on a reference cropping position of the target image frame and the relative displacement; or
determining, when it is detected that the relative displacement is less than or equal to the preset displacement threshold, the reference cropping position of the target image frame as the target cropping position corresponding to the target image frame,
wherein the reference cropping position of the target image frame comprises at least one from a group consisting of: a center point position of a connection line of left and right hand positions in a first reference image frame, a center point position of a connection line of a head position and a hand position in the first reference image frame, and a cropping center position used when an image is cropped from a second reference image frame, wherein the first reference image frame is an image frame temporally preceding the target image frame, and the second reference image frame is an image frame temporally preceding and adjacent to the target image frame.

9. The method according to claim 5, wherein the determining a target cropping position based on the position of the first identified object comprises:
determining the second reference center position as the target cropping position corresponding to the target image frame.

10. The method according to claim 3, wherein before the determining the position of the first identified object based on the target part positions, the method further comprises:
determining a hand position difference between the target image frame and a second reference image frame, wherein the hand position difference is determined based on a difference between a hand position in the target image frame and a hand position in the second reference image frame, and the second reference image frame is an image frame temporally preceding and adjacent to the target image frame; and
adjusting the hand position of the first identified object in the target part positions based on the hand position difference.

11. The method according to claim 10, wherein the adjusting the hand position of the first identified object in the target part positions based on the hand position difference comprises:
adjusting, in response to the hand position difference being greater than a preset position difference threshold, the hand position of the first identified object in the target part positions using a weighted mean of the hand position in the target image frame and the hand position in the second reference image frame; or
maintaining, in response to the hand position difference being less than or equal to the preset position difference threshold, the hand position of the first identified object in the target part positions without adjustment.

12. The method according to claim 3, wherein the determining the state of the second identified object based on the target part positions comprises:
determining a second reference position of the second identified object from the target part positions, wherein the second reference position comprises a hand position of a left hand and a hand position of a right hand; and
determining the state of the second identified object based on the second reference position, wherein the state of the second identified object is determined based on a left-right hand distance between the hand position of the left hand and the hand position of the right hand of the second identified object.

13. The method according to claim 12, wherein the determining a target cropping size based on the state of the second identified object comprises:
adjusting, in response to the left-right hand distance indicated by the state of the second identified object being less than a preset distance threshold, a cropping size, used when the image is cropped from the target image frame, from a first cropping size to a second cropping size, wherein the first cropping size is greater than the second cropping size; or
adjusting, in response to the left-right hand distance indicated by the state of the second identified object being greater than or equal to the preset distance threshold, the cropping size used when the image is cropped from the image frame, from the first cropping size to a third cropping size, wherein the third cropping size is greater than the first cropping size.

14. The method according to claim 13, wherein a cropping size adjustment ratio used when image cropping is performed on two temporally adjacent image frames is a preset ratio value, and the preset ratio value determines a zoom speed presented when images correspondingly cropped from the two temporally adjacent image frames are displayed consecutively.

15. The method according to claim 1, wherein the cropping an image from the target image frame based on the target cropping position and the target cropping size comprises:
determining whether a cropping region of the target image frame exceeds a boundary of the target image frame, wherein the cropping region of the target image frame is determined based on the target cropping position and the target cropping size; and
adjusting, in response to the cropping region exceeding the boundary of the target image frame, the target cropping position on the target image frame, and cropping the image from the target image frame based on the target cropping size and a target cropping position obtained after the adjusting is finished, wherein the cropping region corresponding to the image cropped based on the target cropping position obtained after the adjusting is finished changes to a cropping region that no longer exceeds the boundary of the target image frame; or
cropping, in response to the cropping region not exceeding the boundary of the target image frame, the image from the target image frame based on the target cropping position and the target cropping size.

16. The method according to claim 1 or 15, wherein before the cropping an image from the target image frame based on the target cropping position and the target cropping size, the method further comprises:
determining a facial integrity for the cropping region of the target image frame based on the target cropping position, wherein the facial integrity is used to represent a proportion of a face part located in the cropping region in a complete face; and
in response to the facial integrity being less than a preset integrity threshold, adjusting the target cropping position on the target image frame to make the facial integrity no longer less than the preset integrity threshold.

17. The method according to claim 1 or 15, wherein before the cropping an image from the target image frame based on the target cropping position and the target cropping size, the method further comprises:
determining a cropping position difference between the target image frame and a second reference image frame, wherein the cropping position difference is determined based on a difference between the cropping center position when the cropping is performed on the target image frame and a cropping center position when cropping is performed on the second reference image frame, and the second reference image frame is an image frame temporally preceding and adjacent to the target image frame; and
adjusting, based on the cropping position difference, the cropping center position when the cropping is performed on the target image frame.

18. An image processing apparatus, comprising:
an image frame identification module, configured to identify a target image frame to determine a position of a first identified object and a state of a second identified object;
a cropping position and cropping size determination module, configured to determine a target cropping position based on the position of the first identified object, and determine a target cropping size based on the state of the second identified object, wherein the target cropping position is a cropping center position when cropping is performed on the target image frame, and the target cropping size is a cropping size when the cropping is performed on the target image frame; and
an image cropping module, configured to crop an image from the target image frame based on the target cropping position and the target cropping size, and scale the cropped image to a preset size.

19. An electronic device, comprising:
one or more processors; and
a storage apparatus, configured to store one or more programs, wherein
the one or more programs, when executed by the one or more processors, cause the one or more processors to implement the image processing method according to any one of claims 1 to 17.

20. A storage medium, storing computer-executable instructions, wherein the computer-executable instructions that cause a computer processor to perform the image processing method according to any one of claims 1 to 17.
